# EUROPÄISCHE PATENTSCHRIFT

(11) **EP 0 577 786 B1**
(45) Veröffentlichungstag und Bekanntmachung des Hinweises auf die Patenterteilung: **29.05.1996**
(21) Anmeldenummer: 93900081.6
(22) Anmeldetag: 17.12.1992
(51) Int. Cl.: B60J 7/20

(54) **FALTDACHABDECKUNG**
HOOD COVER
PROTECTION DE CAPOTE

(30) Priorität: 24.01.1992 DE 4201874
(43) Veröffentlichungstag der Anmeldung: 12.01.1994
(73) Patentinhaber: LIENENKAMP, Jörg, D-5800 Hagen (DE)
(72) Erfinder: LIENENKAMP, Jörg, D-5800 Hagen (DE)
(74) Vertreter: Dörner, Lothar, Dipl.-Ing.
(86) Internationale Anmeldenummer: DE9201057
(87) Internationale Veröffentlichungsnummer: WO9314951

(56) Entgegenhaltungen:
- EP-A- 0 302 963

## Beschreibung

Die Erfindung betrifft eine Abdeckung für ein Faltdach eines Cabriolets, das aus einem geöffneten Zustand, in dem das Faltdach von einem Stauraum zwischen Rückenlehne und Kofferraum des Cabriolets aufgenommen und abgedeckt ist, in einen geschlossenen Zustand überführbar ist, in dem das Faltdach an dem Cabriolet arretiert ist, mit einem Mittelteil, von dem das geöffnete Faltdach abgedeckt ist und das aus einer ersten Abdecklage bei geöffnetem Faltdach über eine Zwischenlage, in der es von dem Faltdach passierbar ist, in eine zweite Abdecklage für den Stauraum bei geschlossenem Faltdach bewegbar ist, und mit zwei spiegelsymmetrisch zur Cabriolet-Längsachse angeordneten, an das Mittelteil anschließenden Seitenteilen, von denen bei geöffnetem Faltdach dessen Gestänge abgedeckt ist, wobei das Mittelteil, das in die zweite Abdecklage für den Stauraum bei geschlossenem Faltdach schwenkbar ist, von einer den Stauraum nach oben abdeckenden Platte und einer daran im wesentlichen rechtwinklig angeformten, den Stauraum zum Cockpit abdeckenden Leiste gebildet ist.

Faltdächer von Cabriolets sollen im geöffneten Zustand abgedeckt sein, um die Dachhaut, das Gestänge und die Scharniere des Faltdachs zu schützen, eine gegenüber einem nicht abgedeckten Faltdach verbesserte Aerodynamik zu erreichen und insgesamt die Aesthetik des Cabriolets zu verbessern. Das Problem besteht darin, daß nicht schon bei Antritt einer Fahrt feststeht, ob die ganze Fahrt mit offenem oder geschlossenem Faltdach durchgeführt werden wird. Es muß also insbesondere die Möglichkeit bestehen, während der Fahrt das Faltdach leicht aus dem geöffneten in den geschlossenen Zustand zu überführen und dann die Abdeckung unterzubringen.

Eine Abdeckung mit den eingangs genannten Merkamelen ist zum Beispiel aus der EP-A-0 302 963 (s. insbesondere Figuren 13 und 14) bekannt. Aus der DE-A-3 939 145 (A1) ist ein weiteres Faltdach bekannt. Bei dieser bekannten Abdeckung erfolgt der Übergang von der einen in die andere Abdecklage durch eine Linearbewegung des Mittelteils in der Cabriolet-Längsachse und durch eine Schwenkbewegung der beiden Seitenteile relativ zu dem Mittelteil. Die Bewegungen des Mittelteils und der beiden Seitenteile erfolgen mit Hilfe eines gemeinsamen Antriebsmechanismus. In jeder der beiden Abdecklagen ist der Stauraum von dem Mittelteil und den Seiten- sein teilen abgedeckt. Die bekannte Abdeckung kann aufwendig sein; sie ist insbesondere bei Cabriolets mit relativ kleinem Stauraum nicht oder nur schwer anzuwenden. Die Abdeckung ist außerdem fester Bestandteil des Cabriolets.

Danach liegt der Erfindung die Aufgabe zugrunde, eine einfach aufgebaute Faltdachabdeckung zu schaffen, die auch bei Cabriolets mit relativ kleinem Stauraum die genannten Anforderungen erfüllt. Gemäß der Erfindung wird diese Aufgabe dadurch gelöst, daß die Seitenteile einzeln abnehmbar und bei geschlossenem Faltdach im Cabriolet, vorzugsweise unter dem Mittelteil in seiner zweiten Abdecklage, in dem Stauraum unterbringbar sind.

Die Faltdachabdeckung nach der Erfindung kann infolge ihrer Mehrteiligkeit und der unabhängig von dem Mittelteil abnehmbaren Seitenteile bei geschlossenem Faltdach auf engstem Raum im Cabriolet selbst untergebracht werden. Das Mittelteil überdeckt auch bei geschlossenem Faltdach den Stauraum; die Seitenteile werden von dem Stauraum aufgenommen. Hinter den Kopfstützen lassen sich bequem Lautsprecher einbauen, was in der Regel bei Cabriolets nur vorn und in den Türen möglich ist.

Ausgestaltungen und Weiterbildungen der Erfindung sind in den Unteransprüchen beschrieben. Ein Ausführungsbeispiel der Erfindung ist in der Zeichnung dargestellt und wird nachfolgend im einzelnen beschrieben. Es zeigen:
- Fig. 1: in Seitenansicht den Teil eines Cabriolets, in dem sich der mit einer Abdeckung versehene Stauraum für ein Faltdach in geöffnetem Zustand befindet;
- Fig. 2: in Draufsicht die vollständige Abdeckung;
- Fig. 3: einen Ausschnitt aus Fig. 1 in vergrößerter Darstellung mit dem Faltdach in geöffnetem Zustand und zwei Endlagen der Abdeckung;
- Fig. 4: die zu Fig. 3 gehörende Darstellung bei geschlossenem Faltdach und mit der Abdeckung in einer Zwischenlage.

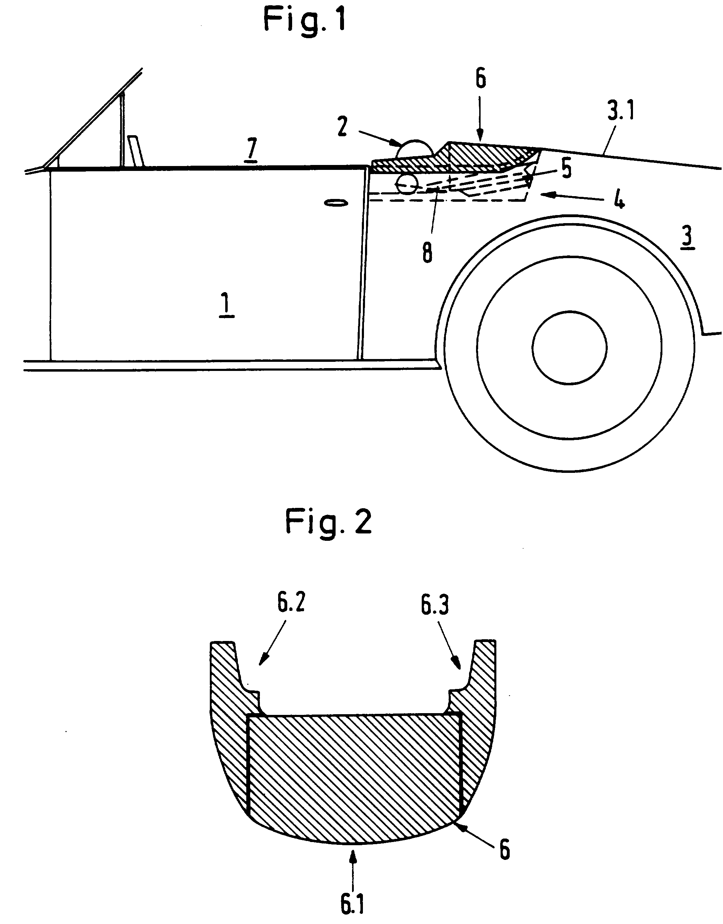

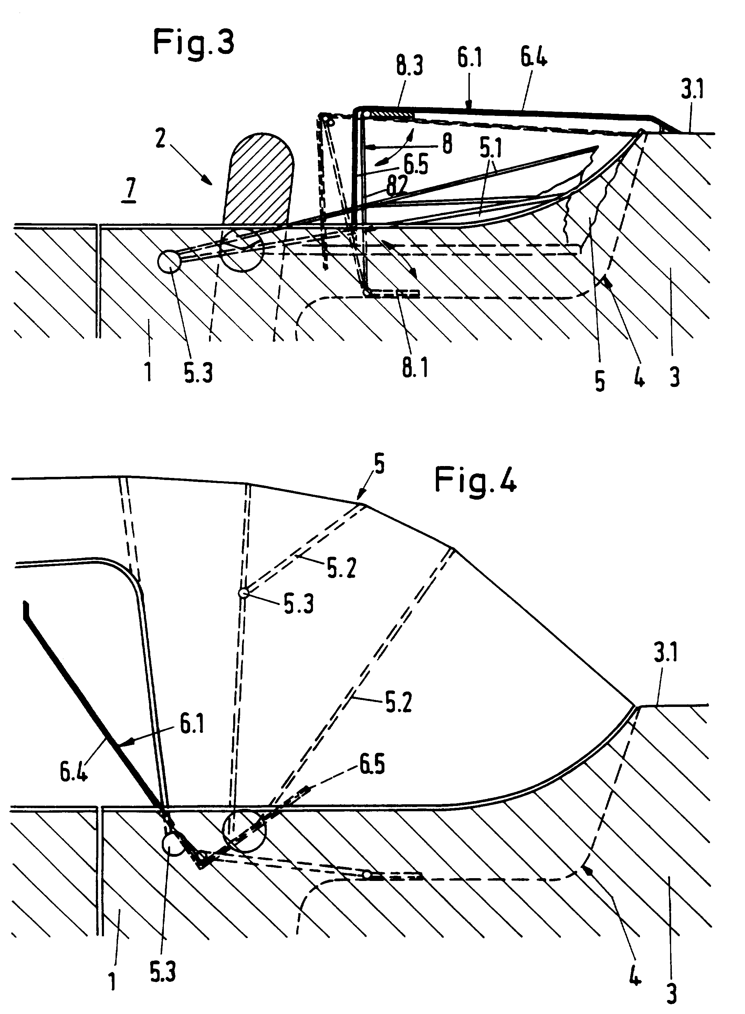

Das als Ausführungsbeispiel gewählte Cabriolet 1 weist zwischen einer Rückenlehne 2 und einem Kofferraum 3 einen Stauraum 4 für ein Faltdach 5 auf. Der Stauraum 4 ist bei von dem Stauraum 4 aufgenommenen Faltdach 5 durch eine Abdeckung 6 abgedeckt. Das Faltdach 5 ist aus seinem geöffneten Zustand, der in Fig. 1 und 3 dargestellt ist, in einen geschlossenen Zustand überführbar, der in Fig. 4 dargestellt ist.

Die Abdeckung 6 weist ein Mittelteil 6.1 auf, von dem das geöffnete Faltdach 5 abgedeckt ist. Das Mittelteil 6.1 ist aus einer ersten Abdecklage bei geöffnetem Faltdach 5 - Fig. 1 und Fig. 3 ausgezogene Darstellung - über eine Zwischenlage - Fig. 4 -, in der es von dem Faltdach 5 passierbar ist, in eine zweite Abdecklage - Fig. 3 gestrichelte Darstellung - für den Stauraum 4 bei geschlossenem Faltdach 5 schwenkbar. Die Abdeckung 6 weist zwei Seitenteile 6.2 und 6.3 auf. Die Seitenteile 6.2 und 6.3 sind spiegelsymmetrisch zur Cabriolet-Längsachse angeordnet. Von den Seitenteilen 6.2 und 6.3 ist bei geöffnetem Faltdach 5 dessen Gestänge 5.1, das in üblicher Weise aus Stangen 5.2 und Scharnieren 5.3 gebildet ist, abgedeckt. Die Seitenteile 6.2 und 6.3 sind einzeln abnehmbar. Sie sind bei geschlossenem Faltdach 5 im Cabriolet 1, vorzugsweise unter dem Mitteilteil 6.1 in seiner zweiten Abdecklage - Fig. 3 gestrichelte Darstellung - in dem Stauraum 4 unterbringbar.

Um den ästhetischen Eindruck des Cabriolets weiter zu verbessern sind die Verbindungsnähte zwischen dem Mitteilteil 6.1 und den beiden Seitenteilen 6.2 und 6.3 in der Verlängerung von Seitenfugen eines Deckels 3.1 des Kofferraums 3 angeordnet. Dort, wo seitlich der Kofferraumdeckel in die hinteren Kotflügel eingepaßt ist, finden sich also in der Verlängerung in Richtung auf die Rückenlehne 2 die Verbindungsnähte zwischen den Teilen der Abdeckung 6. Die Seitenteile 6.2 und 6.3 sind seitlich außen dem Umriß des Cabriolets 1 im Bereich des Fahrzeughecks, vorne innen dem Umriß des Cockpits 7 des Cabriolets 1 angepaßt.

Das Mittelteil 6.1 ist von einer Platte 6.4 und von einer Leiste 6.5 gebildet. Die Platte 6.4 deckt den Stauraum 4 nach oben ab. Die Leiste 6.5 ist an die Platte 6.4 im wesentlichen rechtwinklig angeformt und deckt den Stauraum 4 zum Cockpit 7 ab.

Das Schwenken der Abdeckung 6 erfolgt mit Hilfe einer Schwenkvorrichtung 8. Die Schwenkvorrichtung 8 weist Scharniere 8.1 auf, die am Boden des Stauraums 4 befestigt sind. Die Scharniere 8.1 am Boden des Stauraums 4 sind mit einem Gestänge 8.2 verbunden, das andererseits mit weiteren Scharnieren 8.3 verbunden ist. Die Scharniere 8.3 sind an dem Mittelteil 6.1 der Abdeckung 6 befestigt. Die Befestigung der Scharniere 8.3 am Mittelteil 6.1 erfolgt dabei zweckmäßig im Bereich des zwischen der Platte 6.4 und der Leiste 6.5 gebildeten Innenwinkels. Das Mittelteil 6.1 ist im übrigen bei geöffnetem Faltdach 5 an seiner dem Cockpit 7 abgewandten Kante mit dem Cabriolet 1 verankert.

Es sei angenommen, daß das Cabriolet 1 offen ist, also das Faltdach 5 von dem Stauraum 4 aufgenommen und durch die Abdeckung 6 abgedeckt ist. In dieser Lage stellt die Abdeckung 6 eine in die Karosserie des Cabriolets 1 integrierte Einheit da, wie aus den Fig. 1 und 3 ersichtlich ist. Zum Schließen des Faltdachs 5 werden zunächst die Seitenteile 6.2 und 6.3 entfernt. Sodann wird das Mittelteil 6.1 um das Scharnier 8.3, dieses zusammen mit dem Gestänge 8.2 um das Scharnier 8.1 geschwenkt - Übergang von Fig. 3 nach Fig. 4 -. In der ausgeschwenkten Lage verläuft das Gestänge 8.2 im wesentlichen in der Verlängerung des Bodens des Stauraums 4; das Mittelteil 6.1 bildet dem gegenüber einen Winkel; es wird in einem Seitenscheibenrahmen im Faltdach 5 sichtbar. In dieser Stellung kann das Faltdach 5 über das Mittelteil 6.1 hinweg geschlossen werden. Bei geschlossenem Faltdach 5 wird dann das Mittelteil 6.1 um das Scharnier 8.3, das Gestänge 8.2 um das Scharnier 8.1 geschwenkt und nimmt eine nicht wesentlich von der Lage, in der die Abdeckung 6 mit dem Cabriolet 1 verankert ist, abweichende Lage ein - strichpunktiert in Fig. 3 -. Vorher können noch die Seitenteile 6.2 und 6.3 in den Stauraum unter das Mittelteil 6.1 gelegt werden.

## Patentansprüche

1. Abdeckung für ein Faltdach eines Cabriolets , das aus einem geöffneten Zustand, in dem das Faltdach von einem Stauraum (4) zwischen Rückenlehne und Kofferraum des Cabriolets aufgenommen und abgedeckt ist, in einen geschlossenen Zustand überführbar ist, in dem das Faltdach an dem Cabriolet arretiert ist, mit einem Mittelteil (6.1), von dem das geöffnete Faltdach abgedeckt ist und das aus einer ersten Abdecklage bei geöffentem Faltdach über eine Zwischenlage, in der es von dem Faltdach passierbar ist, in eine zweite Abdecklage für den Stauraum (4) bei geschlossenem Faltdach bewegbar ist, und mit zwei spiegelsymmetrisch zur Cabriolet-Längsachse angeordneten, an das Mittelteil (6.1) anschließenden Seitenteilen (6.2;6.3), von denen bei geöffnetem Faltdach (5) dessen Gestänge (5.1) abgedeckt ist, wobei das Mittelteil (6.1), das in die zweite Abdecklage für den Stauraum (4) bei geschlossenem Faltdach schwenkbar ist, von einer den Stauraum (4) nach oben abdeckenden Platte (6.4) und einer daran im wesentlichen rechtwinklig angeformten, den Stauraum (4) zum Cockpit (7) abdeckenden Leiste (6.5) gebildet ist, dadurch gekennzeichnet, daß die Seitenteile (6.2;6.3) einzeln abnehmbar und bei geschlossenem Faltdach im Cabriolet, vorzugsweise unter dem Mittelteil (6.1) in seiner zweiten Abdecklage, in dem Stauraum (4) unterbringbar sind.

2. Abdeckung nach Anspruch 1, dadurch gekennzeichnet, daß die Verbindungsnähte zwischen dem Mittelteil (6.1) und beiden Seitenteilen (6.2;6.3) in der Verlängerung von Seitenfugen eines Deckels des Kofferraums angeordnet sind.

3. Abdeckung nach Anspruch 2, dadurch gekennzeichnet, daß die Seitenteile (6.2;6.3) seitlich außen dem Umriß des Cabriolets (1) im Bereich des Fahrzeughecks, vorne innen dem Umriß des Cockpits (7) des Cabriolets (1) angepaßt sind.

4. Abdeckung nach einen der Ansprüche 1 bis 3, dadurch gekennzeichnet, daß am Boden des Stauraums (4) Scharniere (8.1) befestigt sind, die über ein Gestänge (8.2) mit Scharnieren (8.3) verbunden sind, die an dem Mittelteil (6.1) befestigt sind.

5. Abdeckung nach Anspruch 4, dadurch gekennzeichnet, daß die am Mittelteil (6.1) befestigten Scharniere (8.3) im Bereich des zwischen Platte (6.4) und Leiste (6.5) gebildeten Innenwinkels angeordnet sind.

6. Abdeckung nach einem der Ansprüche 1 bis 5, dadurch gekennzeichnet, daß das Mittelteil (6.1) bei geöffnetem Faltdach (5) an seiner dem Cockpit (7) abgewandten Kante mit dem Fahrzeugheck verankert ist.

## Claims

1. Cover for a folding roof of a cabriolet, which roof may be transferred from an open state, in which the folding roof is received and covered by a stowage area (4) between the back of the seat and the luggage boot of the cabriolet, into a closed state in which the folding roof is fixed to the cabriolet, having a middle part (6.1), by which the open folding roof is covered and which is movable out of a first covering position when the folding roof is open, via an intermediate position in which the folding roof may pass the middle part, into a second covering position for the stowage area (4) when the folding roof is closed, and having two side parts (6.2; 6.3) which are arranged mirror-symmetrically relative to the cabriolet longitudinal axis and adjoin the middle part (6.1) and by which, when the folding roof (5) is open, the linkage (5.1) of said folding roof is covered, the middle part (6.1), which is capable of swivelling into the second covering position for the stowage area (4) when the folding roof is closed, being formed by a plate (6.4) covering the stowage area (4) in an upward direction and a strip (6.5) formed on the plate substantially at right angles thereto and covering the stowage area (4) in the direction of the passenger area (7), characterized in that the side parts (6.2; 6.3) are individually removable and, when the folding roof is closed, may be accommodated in the stowage area (4) of the cabriolet, preferably under the middle part (6.1) in its second covering position.

2. Cover according to claim 1, characterized in that the connecting seams between the middle part (6.1) and both side parts (6.2; 6.3) are disposed in the extension of lateral joints of a lid of the luggage boot.

3. Cover according to claim 2, characterized in that the side parts (6.2; 6.3) are adapted externally at the side to the contour of the cabriolet (1) in the region of the tail of the vehicle and internally at the front to the contour of the passenger area (7) of the cabriolet (1).

4. Cover according to one of claims 1 to 3, characterized in that fastened to the bottom of the stowage area (4) are hinges (8.1), which are connected by a linkage (8.2) to hinges (8.3) fastened to the middle part (6.1).

5. Cover according to claim 4, characterized in that the hinges (8.3) fastened to the middle part (6.1) are disposed in the region of the internal angle formed between plate (6.4) and strip (6.5).

6. Cover according to one of claims 1 to 5, characterized in that, when the folding roof (5) is open, the middle part (6.1) is anchored at its edge remote from the passenger area (7) to the tail of the vehicle.

## Revendications

1. Cadre protecteur pour une capote de cabriolet, qui peut être amenée d'un état d'ouverture, dans lequel la capote est logée et recouverte dans un espace de repli (4) entre le dossier et le coffre du cabriolet, à un état de fermeture, dans lequel la capote est bloquée sur le cabriolet, comportant une partie centrale (6.1), qui recouvre la capote ouverte et peut être déplacée, à partir d'une première position de couverture en position d'ouverture de la capote, en passant par une position intermédiaire, dans laquelle elle peut être dépassées par la capote, à une seconde position de couverture pour l'espace de repli (4) en position de fermeture de la capote, et comportant deux parties latérales (6.2, 6.3), disposées symétriquement par rapport à l'axe longitudinal du cabriolet et prolongeant la partie centrale (6.1), par lesquelles est recouverte la tringlerie (5.1) de la capote en position d'ouverture, la partie centrale (6.1), qui peut pivoter dans la seconde position de couverture pour l'espace de repli (4) en position de fermeture de la capote, étant formée par un panneau (6.4) recouvrant vers le haut l'espace de repli (4), et par une barre (6.5), conformée essentiellement à angle droit sur ce panneau et recouvrant l'espace de repli (4) par rapport à l'habitacle (7), caractérisé en ce que les parties latérales (6.2, 6.3) sont amovibles individuellement, et peuvent être logées dans l'espace de repli (4) du cabriolet, en position de fermeture de la capote, de préférence au-dessous de la partie centrale (6.1) dans sa seconde position de couverture.

2. Cadre protecteur suivant la revendication 1, caractérisé en ce que les joints d'assemblage entre la partie centrale (6.1) et les deux parties latérales (6.2, 6.3) sont disposés dans le prolongement de joints latéraux d'un capot du coffre.

3. Cadre protecteur suivant la revendication 2, caractérisé en ce que les parties latérales (6.2, 6.3) sont adaptées, latéralement et à l'extérieur, au contour du cabriolet (1) dans la zone de l'arrière du véhicule, et au contour de l'habitacle (7) du cabriolet (1), à l'avant et à l'intérieur.

4. Cadre protecteur suivant l'une des revendications 1 à 3, caractérisé en ce que des charnières (8.1) sont fixées sur le fond de l'espace de repli (4), ces charnières étant assemblées, par l'intermédiaire d'une tringle (8.2), avec des charnières (8.3) fixées sur la partie centrale (6.1).

5. Cadre protecteur suivant la revendication 4, caractérisé en ce que les charnières (8.3), fixées sur la partie centrale (6.1), sont disposées dans la zone de l'angle interne, formé entre le panneau (6.4) et la barre (6.5).

6. Cadre protecteur suivant l'une des revendications 1 à 5, caractérisé en ce que la partie centrale (6,1), en position d'ouverture de la capote (5), est ancrée à l'arrière du véhicule par son bord opposé à l'habitacle (7).
